(19)

Europäisches Patentamt

European Patent Office

Office européen des brevets

(11) **EP 4 518 166 A1**

(12) **EUROPEAN PATENT APPLICATION**

(43) Date of publication:
05.03.2025 Bulletin 2025/10

(51) International Patent Classification (IPC):
*H04B 1/00* ^(2006.01)

(21) Application number: 24196096.2

(22) Date of filing: 23.08.2024

(52) Cooperative Patent Classification (CPC):
H04B 1/0082

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 01.09.2023 GB 202313325

(71) Applicant: **Nokia Technologies Oy**
**02610 Espoo (FI)**

(72) Inventors:
- NIELSEN, Kim
  9280 Storvorde (DK)
- JALILI, Feridoon
  9260 Gistrup (DK)

(74) Representative: **Nokia EPO representatives**
**Nokia Technologies Oy**
**Karakaari 7**
**02610 Espoo (FI)**

(54) **A MULTI-CHANNEL RADIO TRANSCEIVER**

(57)    An apparatus comprising:
a first signal path for a first channel operating at a first frequency within a first frequency range;
a second signal path for a second channel operating at a second frequency within a second frequency range;
control means for controlling frequency-conversion in the second signal path between the second frequency and the first frequency, wherein a magnitude of frequency-conversion is controlled to change in dependence upon a difference between the second frequency and the first frequency.

EP 4 518 166 A1

## Description

TECHNOLOGICAL FIELD

Examples of the disclosure relate to a multi-channel radio transceiver.

BACKGROUND

It is common for a radio transceiver to communicate using a first channel operating at a first frequency within a first frequency range and using a second channel operating at a second frequency within a second frequency range.

In some examples, there is a first signal path for the first channel and a second, different, signal path for the second channel.

The different signal paths can, for example, have many components.

It would be desirable to allow different signal paths to share components.

BRIEF SUMMARY

According to various, but not necessarily all, examples there is provided an apparatus comprising:

> a first signal path for a first channel operating at a first frequency within a first frequency range;
> a second signal path for a second channel operating at a second frequency within a second frequency range;
> control means for controlling frequency-conversion in the second signal path between the second frequency and the first frequency, wherein a magnitude of frequency-conversion is controlled to change in dependence upon a difference between the second frequency and the first frequency.

In some but not necessarily all examples, the control means is configured to control frequency-conversion in the second signal path between the second frequency and the first frequency, wherein a magnitude of frequency-conversion is controlled to change with changes in magnitude of the second frequency within the second frequency range and is controlled to match a difference between the second frequency and the first frequency.

In some but not necessarily all examples, the control means for controlling frequency-conversion in the second signal path between the second frequency and the first frequency, is configured to control an intermediate frequency in the second signal path to match the first frequency.

In some but not necessarily all examples, the apparatus comprises circuitry associated with the first signal path and the second signal path and configured for the first frequency range.

In some but not necessarily all examples, the apparatus comprises a shared frequency synthesizer that provides an output frequency signal to the first signal path and the second signal path.

In some but not necessarily all examples, the shared frequency synthesizer is configured to provide a frequency-conversion at the first signal path between the first frequency and a reference frequency and a frequency-conversion at the second signal path between the first frequency and the reference frequency.

In some but not necessarily all examples, the shared frequency synthesizer is a phase-locked loop (PLL) synthesizer comprising a local oscillator and a programmable phase locked loop for providing the output frequency signal, and a local oscillator for providing an input to the phase-locked loop.

In some but not necessarily all examples, the first signal path for use with the first channel at the first frequency comprises

> a first frequency converter for frequency conversion between the first frequency and a reference frequency; and
> the second signal path for use with the second channel at the second frequency comprises

>> a second frequency converter for frequency conversion between the second frequency and the first frequency; and
>> a third frequency converter for frequency conversion between the first frequency and a reference frequency;
>> wherein the control means for controlling frequency-conversion in the second signal path between the second frequency and the first frequency, is configured to control the second frequency converter and
>> wherein the control means is configured to commonly and simultaneously control both the first frequency converter and third frequency converter to convert between the first frequency and the reference frequency.

In some but not necessarily all examples, the apparatus comprises processing circuitry configured for applying the same analog-digital conversion process to the first channel and the second channel.

In some but not necessarily all examples, a first processing circuitry is controlled to apply the analog-digital conversion process to the first channel and second processing circuitry is configured to apply simultaneously the analog-digital conversion process to the second channel or

wherein a first processing circuitry (ABB) is controlled to apply, during a first time, the analog-digital conversion process to the first channel and not the second channel and to apply, during a second time, the analog-digital conversion process to the second channel and not the first channel.

In some but not necessarily all examples, the first channel is a first physical channel and the first frequency is a radio frequency of the first physical channel and the second channel is a second physical channel and the second frequency is a radio frequency of the second physical channel.

In some but not necessarily all examples, the apparatus is configured to control frequency-conversion for the second channel between the second frequency and the first frequency in dependence upon received downlink control information defining the second frequency and and/or in dependence upon received downlink control information defining the first frequency

In some but not necessarily all examples, the first signal path is configured for transfer of at least one of a plurality of component carriers that are combined for higher bandwidth information transfer; and/or

the second signal path is configured for transfer of at least one of a plurality of component carriers that are combined for higher bandwidth information transfer; and/or the first signal path and the second signal path are configured for transfer of multiple component carriers that are combined for higher bandwidth information transfer.

In some but not necessarily all examples, the apparatus is configured to split a received physical channel into multiple parallel second channels of contiguous frequency ranges

In some but not necessarily all examples, the apparatus is configured as user equipment.

According to various, but not necessarily all, examples there is provided a computer program comprising computer program instruction on an apparatus, enables the apparatus to:
control frequency conversion in a first signal path for a first channel operating at a first frequency within a first frequency range and a second signal path for a second channel operating at a second frequency within a second frequency range,

According to various, but not necessarily all, examples there is provided a method comprising:
controlling frequency-conversion, in a second signal path for a second channel operating at a second radio frequency within a second frequency range, between the second radio frequency and a first radio frequency, wherein the first radio frequency is the radio frequency at which a different signal path for a different channel operates, the first frequency being within a first frequency range, wherein a magnitude of frequency-conversion is controlled to change in dependence upon a difference between the second frequency and the first frequency.

According to various, but not necessarily all, examples there is provided an apparatus comprising:
a first signal path for a first channel operating at a first frequency within a first frequency range comprising:

a first frequency converter for frequency conversion between the first frequency and a reference frequency
a second signal path for a second channel operating at a second frequency within a second frequency range comprising:

a second frequency converter For frequency conversion between the second frequency and the first frequency; and
a third frequency converter for frequency conversion between the first frequency and a reference frequency; and
control means configured to commonly and simultaneously control both the first frequency converter and third frequency converter to convert between the first frequency and the reference frequency.

In some but not necessarily all examples, the control means is configured to control the second frequency converter to convert between the second frequency and the first frequency.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example of the subject matter described herein;
FIG. 2A shows another example of the subject matter described herein;
FIG. 2B shows another example of the subject matter described herein;
FIG. 3 shows another example of the subject matter described herein;
FIG. 4A shows another example of the subject matter described herein;
FIG. 4B shows another example of the subject matter described herein;

FIG. 5 shows another example of the subject matter described herein;

FIG. 6A shows another example of the subject matter described herein;

FIG. 6B shows another example of the subject matter described herein;

FIG. 7 shows another example of the subject matter described herein;

FIG. 8 shows another example of the subject matter described herein;

FIG. 9 shows another example of the subject matter described herein;

FIG. 10 shows another example of the subject matter described herein;

FIG. 11 shows another example of the subject matter described herein;

FIG. 12 shows another example of the subject matter described herein;

FIG. 13 shows another example of the subject matter described herein;

FIG. 14 shows another example of the subject matter described herein;

FIG. 15 shows another example of the subject matter described herein;

FIG. 16 shows another example of the subject matter described herein;

FIG. 17 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

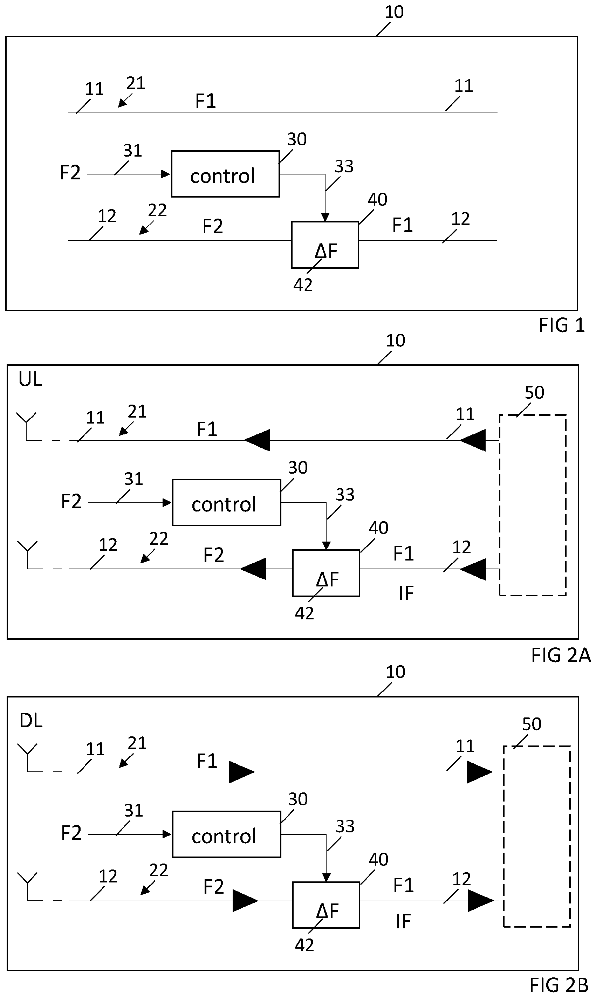

The following examples of FIG. 1 disclose an apparatus 10 comprising:

a first signal path 11 for a first channel 21 operating at a first frequency (F1) within a first frequency range 101;
a second signal path 12 for a second channel 22 operating at a second frequency (F2) within a second frequency range 102;
control means 30 for controlling 33 frequency-conversion 40 in the second signal path 12 between the second frequency (F2) and the first frequency (F1), in dependence upon a difference ΔF 42 between the second frequency (F2) and the first frequency (F1).

In at least some examples, the control means 30 is configured to control frequency-conversion for the second channel 22 between the second frequency (F2) and the first frequency (F1) in dependence upon a change in the second frequency (F2) and/or a change in the first frequency (F1).

The following examples disclose an apparatus 10 comprising:

a first signal path 11 for a first channel 21 operating at a first frequency (F1) within a first frequency range 101;
a second signal path 12 for a second channel 22 operating at a second frequency (F2) within a second frequency range 102;
control means 30 for controlling 33 frequency-conversion 40 in the second signal path 12 between the second frequency (F2) and the first frequency (F1), wherein a magnitude 42 of frequency-conversion 40 is controlled to change with changes in magnitude 31 of the second frequency (F2) within the second frequency range and is controlled to match a difference between the second frequency (F2) and the first frequency (F1).

FIG 1 discloses an apparatus 10 comprising:

a first signal path 11 for a first channel 21 operating at a first frequency (F1) within a first frequency range;
a second signal path 12 for a second channel 22 operating at a second frequency (F2) within a second frequency range; and
a controller 30 configured to control 33 frequency-conversion 40 in the second signal path 12 between the second frequency (F2) and the first frequency (F1), in dependence upon a difference between the second frequency (F2) and the first frequency (F1).

In at least some examples, the controller 30 is configured to control frequency-conversion for the second channel 22 between the second frequency (F2) and the first frequency (F1) in dependence upon a change in the second frequency (F2) and/or a change in the first frequency (F1).

In this example, the controller 30 configured to control 33 frequency-conversion 40 in the second signal path 12 between the second frequency (F2) and the first frequency (F1), wherein a magnitude 42 of frequency-conversion is controlled to change with changes in magnitude 31 of the second frequency (F2) within the second frequency range and is controlled to match a difference between the second frequency (F2) and the first frequency (F1).

The controller 30 controls 33 a magnitude 42 of frequency-conversion 40 between the second frequency (F2) and the first frequency (F1), in the second signal path 12, to match a difference between the second frequency (F2) and the first frequency (F1). The difference ΔF between the second frequency (F2) and the first frequency (F1) has a magnitude |F2-F1|.

The apparatus 10 is configured to match the frequency of a frequency-converted signal in the second signal path 12 to a frequency of a signal in the first signal path 11.

It should be appreciated that the match does not need to be exact but needs to be within the tolerances of the apparatus 10. The controlled difference ∆F between the second frequency (F2) and the first frequency (F1) can therefore have a magnitude |F2-F1| +/- ∆, where ∆ is for example a bandwidth tolerance of the apparatus 10.

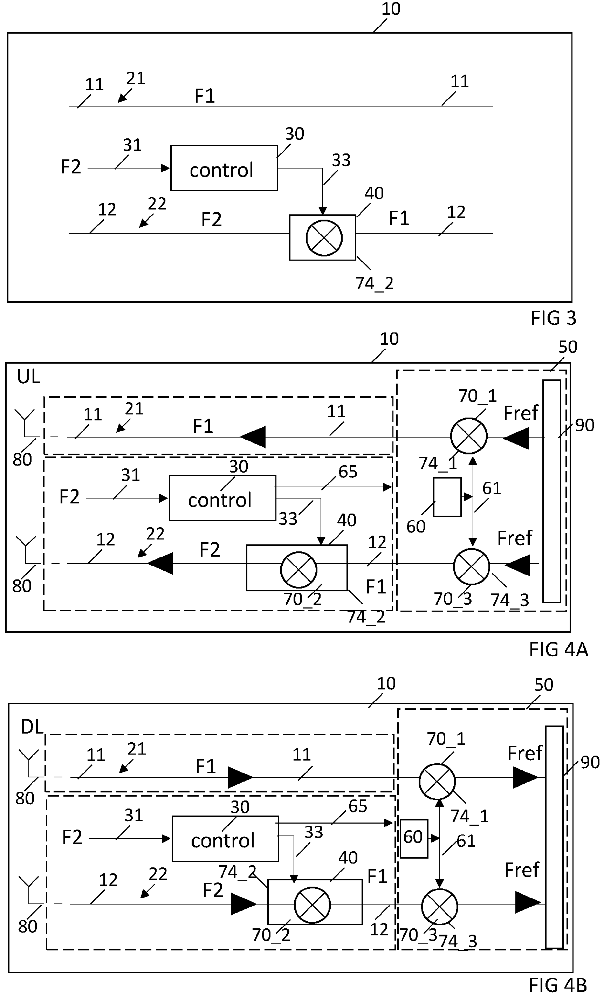

The apparatus 10 sets the converted frequency of one signal (second channel 22) to match the frequency of the other signal (first channel 21), so both can be processed using circuitry 50 configured for the first frequency range. For example, the circuitry 50 could perform direct analog-digital conversion at the first frequency range. For example, the circuitry 50 could perform frequency conversion to/from the first frequency, as illustrated in FIGs 2A, 2B, 4A, 4B.

In some examples, there is no frequency conversion in the first signal path 11. In other examples, for example FIGs 2A, 2B, 4A, 4B, there is frequency conversion 50 in the first signal path 11.

In the following examples, but not necessarily all examples, the second frequency (F2) is greater than the first frequency (F1).

In some examples, as illustrated in FIGs 2A, 2B, 4A, 4B, the first frequency (F1) of the first channel 21 and an intermediate frequency (IF) of the second channel 22 match. Where the first frequency (F1) and the intermediate frequency match, there is frequency conversion 50 in the first signal path 11. The apparatus 10 sets the converted frequency of one signal (the intermediate frequency of the second channel 22) to match the frequency of the another signal (first channel 21), so both channels can be processed 50 using common frequency conversion circuitry. Some examples, FIGs 4A, 4B, illustrate conversion of the first frequency (F1) (the intermediate frequency) to a reference frequency (Fref) e.g. a baseband frequency for further baseband processing 90. The reference frequency (Fref) could, for example, be DC (Direct Current).

In some examples, for example FIG 2A and FIG 4A, the first channel 21 and the second channel 22 are transmission channels at the apparatus 10, for example uplink (UL) channels in a cellular telecommunication network.

In some examples, for example FIG 2B and FIG 4B, the first channel 21 and the second channel 22 are reception channels at the apparatus 10, for example downlink (DL) channels in a cellular telecommunication network.

FIG 3 illustrates an example in which a frequency converter 74_2 is used for frequency-conversion 40 in the second signal path 12 between the second frequency (F2) and the first frequency (F1), in dependence upon a difference between the second frequency (F2) and the first frequency (F1).

FIG 4A illustrates an example as illustrated in FIG 2A. The first channel 21 and the second channel 22 are transmission channels at the apparatus 10, for example uplink channels in a cellular telecommunication network. The frequency conversion in the first channel 21 is up-conversion from the reference frequency (Fref) to the first frequency (F1). The frequency conversion in the second channel 22 is up-conversion from the reference frequency (Fref) to the first frequency (F1), the intermediate frequency, and then up-conversion from the first frequency (F1) to the second frequency (F2).

FIG 4B illustrates an example as illustrated in FIG 2B. The first channel 21 and the second channel 22 are reception channels at the apparatus 10, for example downlink channels in a cellular telecommunication network. The frequency conversion in the first channel 21 is down-conversion from the first frequency (F1) to the reference frequency (Fref). The frequency conversion in the second channel 22 is down-conversion from the second frequency (F2) to the first frequency (F1), the intermediate frequency, and then down-conversion from the first frequency (F1) to the reference frequency (Fref).

Referring to both Figs 4A & 4B, the apparatus 10 sets the converted frequency of one signal (second channel 22) to match the radio frequency of the other signal (first channel 21), so both can be processed using circuitry 50 configured for the first frequency range. The circuitry 50 performs frequency conversion between the first frequency and a reference frequency (Fref) for both the first signal path 11 and the second signal path 12. The second frequency (F2) is greater than the first frequency (F1).

In FIGs 4A and 4B, a frequency converter 74_1 is used for frequency-conversion in the first signal path 11 between the reference frequency (Fref) and the first frequency (F1) and an associated frequency converter 74_3 is used for frequency-conversion in the second signal path 12 between the reference frequency (Fref) and the first frequency (F1) which is an intermediate frequency for the second signal path 12. This conversion is controlled in dependence upon changes in a difference between the reference frequency (F2) and the first frequency (F1).

A frequency converter 74_2 is used for frequency-conversion 40 in the second signal path 12 between the second frequency (F2) and the first frequency (F1), the intermediate frequency. This conversion is controlled in dependence upon changes in the difference between the second frequency (F2) and the first frequency (F1).

It will therefore be appreciated that

the first signal path 11 for use with the first channel 21 at the first frequency (F1) comprises:
a first frequency converter 74_1 for frequency conversion between the first frequency (F1) and a reference frequency Fref and
the second signal path 12 for use with the second channel 22 at the second frequency (F2) comprises:

a second frequency converter 74_2 for frequency conversion between the second frequency (F2) and the first frequency (F1); and
a third frequency converter 74_3 for frequency conversion between the first frequency (F1) and a reference frequency Fref.

The controller 30 is configured to control the second frequency converter 74_2 to perform frequency-conversion in the second signal path 12 between the second frequency and the first frequency and is configured to commonly and simultaneously control (e.g. using control signal 65 ) both the first frequency converter 74_1 and third frequency converter 74_3 to convert between the first frequency (F1) and the reference frequency Fref. The controller 30 is configured to vary frequency-conversion in the second signal path 12 between the second frequency and the first frequency.

The controller 30 is configured to commonly and simultaneously vary the common frequency-conversion in the signal paths 11, 12 between the second frequency and the first frequency.

As the first frequency (F1) and/or the second frequency (F2) is required to vary, the controller 30 responds by controlling 33:

a magnitude of frequency-conversion 40 between the reference frequency (Fref) and the first frequency (F1), in the first and second signal paths 11,12, to match a difference between the fixed reference frequency (Fref) and the variable first frequency (F1) i.e. the difference between the reference frequency (Fref) and the first frequency (F1) has a magnitude $|F1-Fref|$;
a magnitude 42 of frequency-conversion 40 between the second frequency (F2) and the first frequency (F1), in the second signal path 12, to match a difference between the variable second frequency (F2) and the first frequency (F1) i.e. the difference $\Delta F$ between the second frequency (F2) and the first frequency (F1) has a magnitude $|F2-F1|$.

It will be appreciated that the second channel 22 has at least one additional frequency-conversion step compared to the first channel 21.

It will therefore be appreciated that in at least some examples an apparatus 10 comprises:

a first signal path 11 for a first channel 21 operating at a first frequency (F1) within a first frequency range comprising a first frequency converter 74_1 for frequency conversion between the first frequency (F1) and a reference frequency Fref;
a second signal path 12 for a second channel 22 operating at a second frequency (F2) within a second frequency range comprising a second frequency converter 74_2 for frequency conversion between the second frequency (F2) and the first frequency (F1); and
a third frequency converter 74_3 for frequency conversion between the first frequency (F1) and a reference frequency Fref; and
control means 30 configured to commonly and simultaneously control both the first frequency converter 74_1 and third frequency converter 74_3 to convert between the first frequency (F1) and the reference frequency Fref when the first frequency (F1) changes.

The control means 30 can additionally be configured to control the second frequency converter 74_2 to convert between the second frequency (F2) and the first frequency (F1) when the first frequency (F1) changes and/or when the second frequency (F2) changes.

The frequency converter 74_1 and the frequency converter 74_2 which perform the same frequency conversion on different channels 21, 22 share a frequency synthesizer 60 that provides an output frequency signal 61 to the frequency converter 74_1 of the first signal path 11 and to the frequency converter 74_3 of the second signal path 12. The frequency converter 74_1 performs a frequency-conversion at the first signal path 11 between the first frequency (F1) and the reference frequency Fref. The frequency converter 74_3 performs a frequency-conversion at the second signal path 12 between the first frequency (F1) from the reference frequency Fref.

The frequency synthesizer 60 is configured to operate across the first frequency range.

In the examples illustrated in FIGs 4A and 4B, the frequency converters comprise mixers 70. The input signal to a frequency converter 74 for frequency conversion is provided as an input to a mixer 70. The mixers 70_1, 70_3 receive an input signal from a frequency synthesizer 60.

The frequency converter 74_1 for the first channel 21 and the frequency converter 74_3 for the second channel 22 share a frequency synthesizer 60. The output of the shared frequency synthesizer 60 is provided to a mixer 70_1 for the first channel 21 and a mixer 70_3 for the second channel 22. The same components can be used for the mixers 70_1, 70_3.

The paths 21, 22 can comprise other components not illustrated such as linear amplifiers (for reception) and power amplifiers (for transmission) switches for band selection and filters for out-of-band attenuation.

The second frequency converter 74_2 can be proximal to the antenna 80.

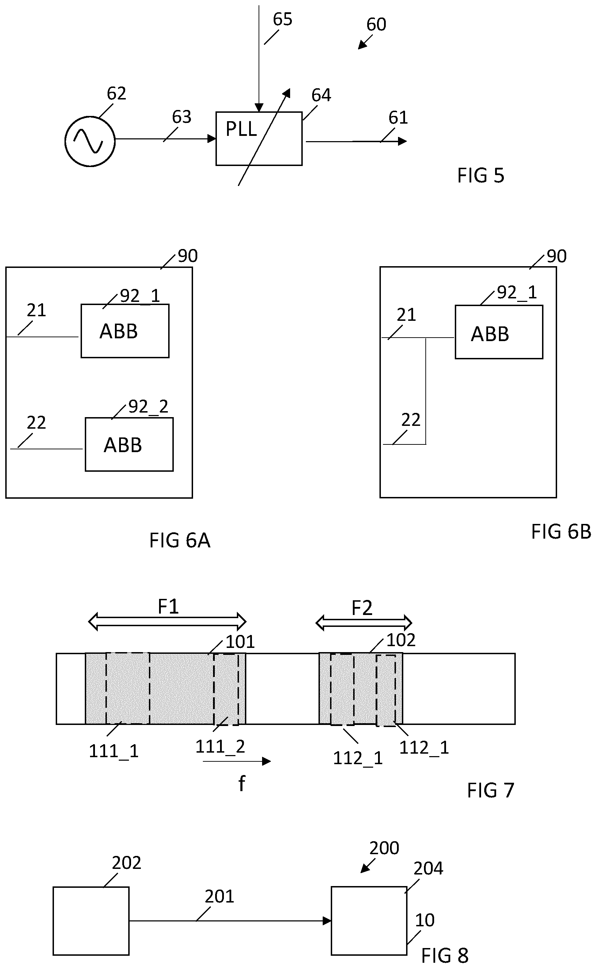

FIG 5 illustrates an example of a frequency synthesizer 60 shared between the channels 21, 22. The shared frequency synthesizer 60 is a phase-locked loop (PLL) comprising a programmable phase locked loop (PLL) 64 for providing the output frequency signal 61, and a local oscillator 62 for providing an input 63 to the phase-locked loop.

The PLL 64 is programmed by control signal 65. In the examples illustrated in FIGs 4A and 4B, but not necessarily all examples the control signal 65 is provided by the controller 30 to control the value of the first frequency (F1).

FIG 6A and 6B illustrate examples of the processing circuitry 90, in this example analog baseband (ABB) processing circuitry 92. In these examples, the ABB processing circuitry 92 comprises amplifiers, channel filters with bandwidth configurability, gain control and analog-digital conversion circuitry. Analog-digital conversion circuitry, for transmission, can be digital to analog conversion circuitry Analog-digital conversion circuitry, for reception, can be analog to digital conversion circuitry.

FIG 6A illustrates an example where different analog baseband (ABB) circuitry 92_1, 92_2 are used for the first channel 21 and the second channel 22. The different analog baseband (ABB) circuitry 92_1, 92_2 can be used simultaneously for the first channel 21 and the second channel 22. The first ABB circuitry 92_1 is controlled to apply the analog-digital conversion (ADC) process to the first channel 21 and second ABB circuitry 92_2 is configured to apply simultaneously the analog-digital conversion process to the second channel 22. The first and second channels 21, 22 do not share processing circuitry (ADC).

FIG 6B illustrates an example where an analog baseband (ABB) circuitry 92_1 is shared between the first channel 21 and the second channel 22. The analog baseband (ABB) circuitry 92_1 can be used for the first channel 21 or for the second channel 22 but cannot be used simultaneously for the first channel 21 and the second channel 22. The first ABB circuitry 92_1 is controlled to apply, during a first time, the analog-digital conversion (ADC) process to the first channel 21 and not the second channel 22 and to apply, during a second time, the same analog-digital conversion process to the second channel 22 and not the first channel 21. The first and second channels 21, 22 share processing circuitry (ADC).

In FIG 6A and 6B, the processing circuitry 90 is configured to applying the same analog-digital conversion process to the first channel 21 and the second channel 22 i.e. the same method of analog-digital conversion is used for both paths but not necessarily simultaneously. For example, the analog-digital conversion can have the same bandwidth limitations for both channels, constrained by the processing circuitry 90.

Fig 7 illustrates an example of a portion of the electromagnetic spectrum (radio frequencies). It illustrates an example of a first frequency range 101 in which the first frequency (F1) lies. It illustrates an example of a second frequency range 102 in which the second frequency (F2) lies.

In at least some examples, the first channel 21 is a first physical channel and the first frequency (F1) is a radio frequency of the first physical channel and the second channel 22 is a second physical channel and the second frequency (F2) is a radio frequency of the second physical channel. The intermediate frequency of the second channel 22 can be controlled to be the first frequency (F1).

As previously described, in some examples the first frequency can vary within the first frequency range 101 and the second frequency (F2) can vary within the second frequency range 102.

In the illustrated example, the first frequency range 101 and the second frequency range 102 are exclusive and do not overlap and the second frequency range is at higher frequencies than the first frequency range.

In some examples the first frequency range 101 is between 8 and 20GHz, for example between 10.7GHz - 15.35GHz and the second frequency range is greater than 24 GHz, for example frequency region two (FR2) of 5G 3GPP (New Radio).

In the illustrated example, the first frequency range 101 comprises exclusive, non-overlapping bands 111_1, 111_2 and the second frequency range 102 comprises exclusive, non-overlapping bands 112_1, 112_2.

The first frequency (F1) is within a first frequency band 111 and the second frequency (F2) is within a second frequency band 122.

In some examples, the first frequency (F1) band 111_i containing the first frequency (F1) and the second frequency (F2) band 112_j containing the second frequency (F2) have the same bandwidth.

Carrier aggregation (CA) combines data transferred by different component carriers. The component carriers are at different frequencies. The component carriers that are combined can be in the same band or can be in different bands.

Dual Connectivity (DC) also combines data transferred by different component carriers. The component carriers are at different frequencies. The component carriers that are combined can be in the same band or can be in different bands.

Component carrier combination (CA or DC) can for example combine data transferred by different component carriers within the first frequency range 101. The component carriers that are combined can be in the same band 111_i or can be in different bands 111_i, 111J.

Component carrier combination (CA or DC) can for example combine data transferred by different component carriers within the second frequency range 102. The component carriers that are combined can be in the same band 112_i or can be in different bands 112_i, 112J.

In at least some examples, the first signal path 11 is configured for transfer of at least one of a plurality of component carriers that are combined for higher bandwidth information transfer (component carrier combination within first frequency range 101); and/or the second signal path 12 is configured for transfer of at least one of a plurality of component carriers that are combined for higher bandwidth information transfer (component carrier combination within second frequency range 102); and/or

the first signal path 11 and the second signal path 12 are configured for transfer of multiple component carriers that are combined for higher bandwidth information transfer (component carrier combination across first frequency range 101 and second frequency range 102).

FIG 8 illustrates an example of a cellular telecommunications network 200.

In this example, the apparatus 10 is a user equipment (UE) 204 and the network node 202 is a transmission reception point (TRP) of the network.

In this example, the network, via the network node 202, sends one or more downlink control signals 201 to the UE 204 defining the telecommunications first frequency (F1) and/or the second frequency (F2). The downlink control signals 201 can, for example, be downlink control information (DCI).

The apparatus 10 is configured to control frequency-conversion for the second channel 22 between the second frequency (F2) and the first frequency (F1) in dependence upon the received downlink control information defining the second frequency (F2) and and/or in dependence upon received downlink control information defining the first frequency (F1).

In some examples, the apparatus 10 is configured to control frequency-conversion for the first channel 21 (and the second channel 22) between the reference frequency (F1) and the first frequency (F1) in dependence upon the received downlink control information defining the first frequency (F1).

Thus, in some examples, the apparatus 10 is configured to determine a change in the first frequency (F1) in dependence upon the received downlink control information defining the first frequency (F1) and to consequently control frequency-conversion for the second channel 22 between the second frequency (F2) and the first frequency (F1) in dependence upon the determined change and is configured to control frequency-conversion for the first channel 21 and the second channel 22 between the reference frequency (F1) and the first frequency (F1) in dependence upon the determined change in the first frequency (F1).

Thus, in some examples, the apparatus 10 is configured to determine a change in the second frequency (F2) in dependence upon the received downlink control information defining the second frequency (F2) and to consequently control frequency-conversion for the second channel 22 between the second frequency (F2) and the first frequency (F1) in dependence upon the determined change.

The apparatus 10 can apply any intermediate frequency in a down-conversion of the second channel 22 at its discretion.

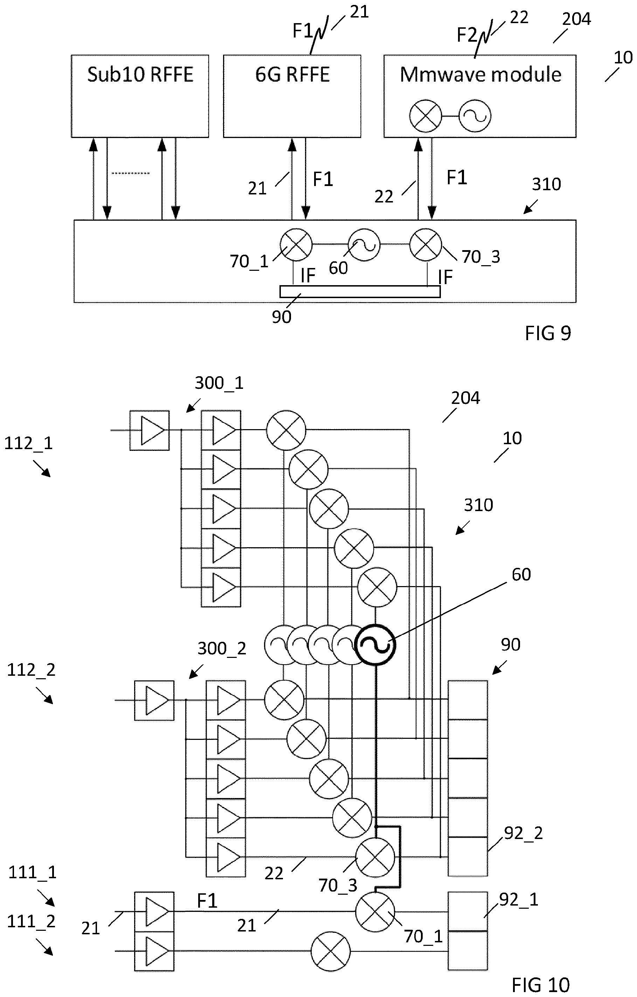

FIG 9 illustrates an example in which the first channel 21 (and the first frequency (F1) and the first frequency range 101) are associated with a first radio access technology and the second channel 22 (and the second frequency (F2) and the second frequency range 102) are associated with a second radio access technology.

The first frequency range 101 can for example be a frequency range defined for 6G (to be decided).The second frequency range 102 can for example be a frequency range defined for 5G (currently defined as FR2).

The bands 112 can for example include FR2 bands n257 to n262. These have bandwidths of 50, 100, 200, 400 MHz . The band n257 is 26.5 - 29.5 GHz, the band n258 is 24.25-27.5 GHz, the band n261 is 27.5-28.35 GHz. The band n259 is 39.5-43.5 GHz, the band n260 is 37-40 GHz and the band n262 is 47.2- 48.20 GHz.

The bands 111 can for example be 10.7GHz to 12.7GHz and 14.3GHz to 15.35 GHz.

FIG 10 illustrates an example of an apparatus 10 where a received physical channel is split 300 into multiple parallel second channels 22 of contiguous frequency ranges.

The received physical channel 112_1 is split 300_1 into multiple parallel second channels of contiguous frequency ranges.

The received physical channel 112_2 is split 300_2 into multiple parallel second channels of contiguous frequency ranges.

This shows how a physical channel bandwidth or carrier aggregation is supported when the combined downlink bandwidth exceeds the bandwidth of an ABB 92.

The received physical channel 112_1 can for example be one of n257 (26.5 - 29.5 GHz), n258 (24.25-27.5 GHz) or n261 (27.5-28.35 GHz).

The received physical channel 112_2 can for example be one of n259 (39.5-43.5 GHz), n260 (37-40 GHz), n262 (47.2- 48.20 GHz).

The received physical channel 111_1 can for example be 10.7GHz - 12.7 GHz.

The received physical channel 111_2 can for example be 14.3 GHz - 15.35 GHz.

The received physical channel 111_1 defines F1 e.g.11.7GHz.

The following examples keep the number of PLL and down-conversion receiver chains in a UE transceiver design at a minimum while supporting the highest combinations of multiple channels such as those defined in 3GPP as carrier aggregation (CA) and dual connectivity (DC) combinations. This is achieved by matching frequency bands of FR1 including the frequencies in 7GHz - 20GHz or 6GHz - 24GHz to the IF frequency used for the frequency region two (FR2) intermediate frequency. The FR2 intermediate frequency is at a mm wavelength (mmwave).

Referring to FIG 9, there is illustrated an example architecture of the UE 204. A RF transceiver 310 connects to a sub-10GHz RF front-end (RFFE), a 6G RF front end (RFFE) and a mmwave module which supports frequency region two (FR2).

The IF used for mmwave up-/down-conversion is matched to the radio frequency of the 6G RFFE which is expected to be a 10.7GHz - 15.35GHz range. This provides advantages in the design when the network configures the UE 204 with active channels in more than one band of operation.

The radiofrequency (F1) of the 6G RFFE system matches and defines the IF frequency of the mmwave system, so that simultaneous operation of the two different spectrum regions is supported simultaneously without needing two separate PLL systems within the transceiver 310.

This is achieved by programming the mmwave module PLL with the radio frequency (F2) of the mmwave channel 22 minus the radio frequency (F1) of the 6G RFFE channel 21 so that the result of frequency downconversion of the radio frequency (F2) of the mmwave channel 22 is the radio frequency (F1) of the 6G RFFE channel 21.

In one use case, a dual connectivity or carrier aggregation (even a measurement report) requires simultaneous transceiver activity on more than one band. The 6G RFFE is operating at RF frequency 10.92GHz (F1), while the mmwave module operates at RF frequency 27.5GHz (F2). The Transmitter PLL residing inside frequency synthesizer 60 of the UE transceiver is set to 10.92GHz for direct up-/down-conversion of the 6G RFFE signal. The same frequency is used for up-/down-conversion at the transceiver Trx PLL of the signal from the mmwave module. The frequency converter 74_2 must be set to 27.5GHz - 10.92GHz = 16.58GHz (ΔF).

$$\Delta F = F2 - F1$$

This method allows the transceiver 310 to support CA/DC and measurement reporting on the 6G RFFE frequency range simultaneous to mmwave operation, with the same PLL inside the transceiver 310, which reduces the amount of required PLL systems in the UE transceiver chip. This saves cost, implementation efforts, die area and current.

In a UE, with a RF system that has limited downlink (DL) bandwidth from a plurality of receiver chains, it is possible to re-use hardware across the 6G RFFE bands and the mmwave module receive chains 11, 12. In a DL limited RF system, the total bandwidth may be defined from any combination of DC/CA inter- and intra-band combinations. The example could be taken from the 3GPP notation of CA including the lettering that defines the bandwidth class:
Total DL BW = n257R = CA_n257E-n259B = DC_"6G Band"A_n257F

The bandwidth class letters after the 3GPP band names indicate the number of component carriers and for the three combinations above the total downlink bandwidth is the same, which is defined by the limited and finite available receiver chains of the transceiver 310.

In the mmwave modules, the frequency synthesizer must tune from 24.25GHz to 29.5GHz, which means that there is a range of 5.25GHz covered by the tuning for the lowest bands in FR2-1. This tuning range of 5.25GHz suffice to cover also the necessary tuning range for the 6G bands inside the range 10.7GHz - 15.35GHz, (4.65GHz).

The tuning range of the mmwave module covers the same range as the new 6G bands.

FIG 10 illustrates a subsystem of the UE transceiver with 4 DL nodes connecting 4 different frequency bands 112_1, 112_2, 111_1, 111_2 to the RF transceiver 310. Since there is no agreement yet for the 6G bands it is not yet possible to provide exact frequencies or band enumeration, however two different ranges [10.7GHz-12.7GHz] and [14.3GHz- 15.35GHz] are used as exemplary bands.

Following the FR2 nodes there is a LNA (Low Noise Amplifier) system that splits 300 to multiple receiver chains. Each of the individual receiver chains in FR2 map to e.g., 200MHz ABBs 92_2. In this example, the combined supported bandwidth would be 1000MHz from these 5 ABBs 92_2. This could support 10 component carriers (CC) of 100MHz bandwidth each going 2-by-2 CC through the ABBs 92_2.

The maximum 1000MHz downlink bandwidth could be based on processing speed and transfer rates of data between the RF transceiver 310 and the following digital processor system 90 that sets the maximum combined data bandwidth of the UE design.

Combining the FR2 bands n259, n260 and n262 [37-48.2 GHz] with the FR2 bands n257, n258 and n261 [24.24-29.5Ghz] the combined use of inter-band and intra-band component carriers will always be limited to the combined ABB bandwidths regardless of how the component carriers of the carrier aggregation is combined.

Adding the new 6G bands 111_1, 111_2 with dedicated ABB paths and expected channel bandwidths matching the FR2 channel bandwidths increases the combined downlink bandwidth. In this case the full bandwidth could be 7 times 200MHz = 1400MHz but could scale to any new ABB bandwidth supported in future designs.

One of the PLLs (60) connects to both the FR2 mixers and to the 6G band mixer. This means that the RF frequency (F1) of the 6G band inside [10.7GHz-12.7GHz] dictates how up to 5 PLL need to be configured.

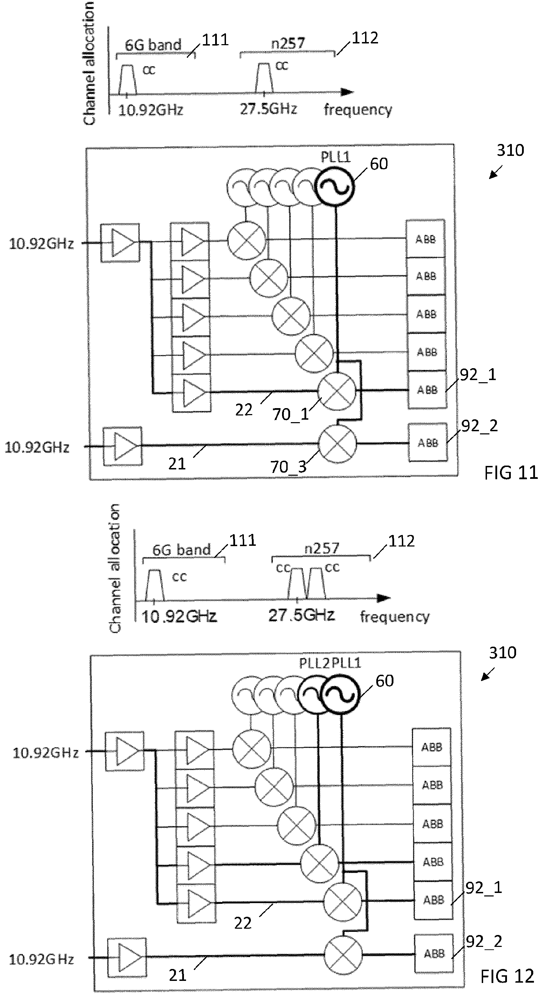

FIG 11 illustrates a part of the transceiver showing how 2 CC interband CA is supported using one PLL (PLL1), which in the example is configured to 10.92GHz same as the 6G band channel allocation. This means that the mmwave PLL inside 204 (not shown in FIG 11) must be set to 16.58GHz. This allows 400MHz combined downlink bandwidth, which is not fully loading the design, however the design has reduced the amount of required PLLs, since PLL1 is shared and running for simultaneous downlink in two bands.

FIG 12 shows how an additional CC in n257 is supported by switching on another RX chain supported by PLL2. PLL2 must be set to the frequency of PLL1 + CC separation in n257, thereby tracking the 6G band RF channel frequency, but allowing correct down-conversion. A combination of FR2 and 6G band CC's eventually will lead to 1200MHz downlink bandwidth through 6 configured CCs using only 5 PLLs.

So, whenever the design is configured for CA/DC of these bands that can share IF and RF frequencies it will utilize the sharing of the PLL and not need two separate PLLs for each RX chain.

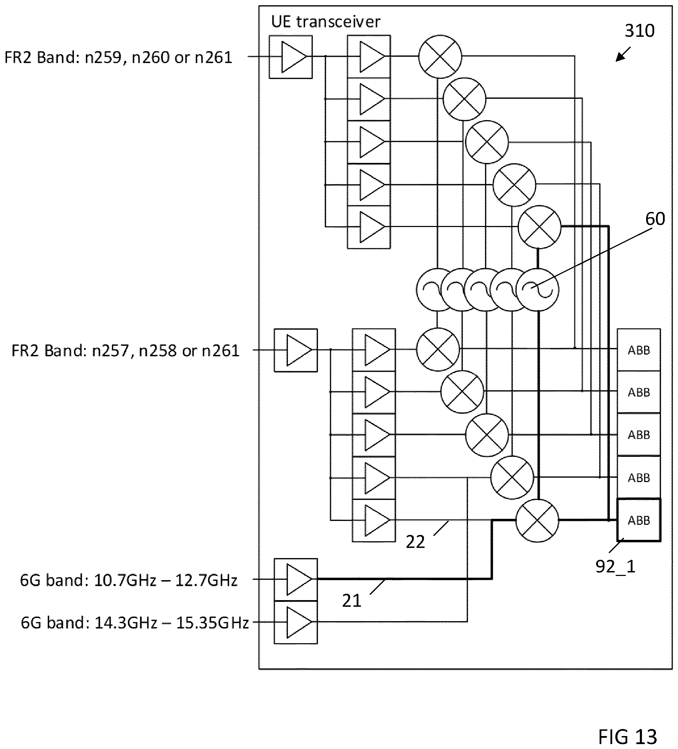

FIG 13 illustrates an alternate embodiment, in which_the system, limited in total ABB bandwidth, can share the ABB 92_1 and not just the PLL.

Assuming the ABB total downlink bandwidth is 5 x 200MHz = 1000MHz then the system of FIG 13 shows that the frequency range of two of the PLLs matches the IF and RF frequencies meaning they can connect to both the FR2 and the 6G band receive chains. One of the receive chains is shown in bold. The bold receive chain can serve the 6G band carrying a CC in the 10.7GHz - 12.7GHz band and use one ABB for up to 200MHz channel bandwidth. This can be aggregated with up to 4 times 200MHz CC's of FR2 to a combined 1000MHz downlink bandwidth (maximum of the DL in this embodiment). Also, 2 times 6G interband CA can be configured with interband or intra-band CA of FR2 at one or both nodes.

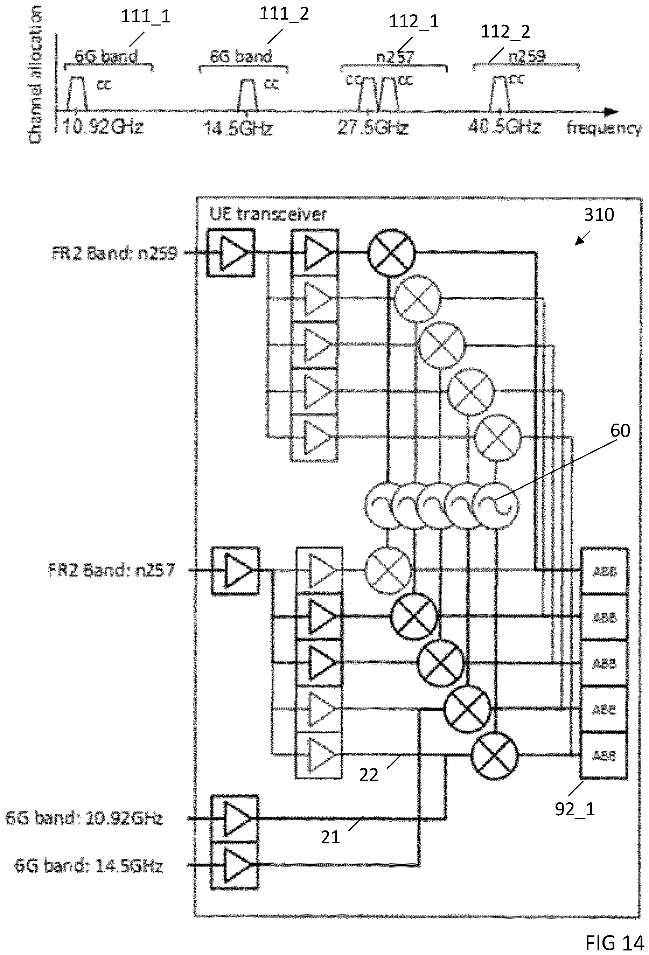

FIG 14 illustrates an example of the second embodiment (FIG 13). In embodiment 2 the sharing of the PLL is that the HW (hardware) and operating frequency ranges match between the receiver chains, but they never operate simultaneously as they did in embodiment 1. The 6G bands attach onto the FR2 receive chains before the mixer and not after. When they connect before the mixer, the mixer is reused (less hardware) and it also saves routing for individual PLLs (less routing and less PLLs). Finally, it allows the same PLL 60 to work for the 6G band as for the FR2 band.

The DC configuration to match this allocation could be:
DC_"6G band1"A-"6G band2"A_n257B-n259A

A combination of the concepts of embodiment 1 and embodiment 2 is not excluded.

A projection of the sharing onto the transmission path of the UE is also not excluded, since also the uplink frequencies may be configured similarly regarding PLL.

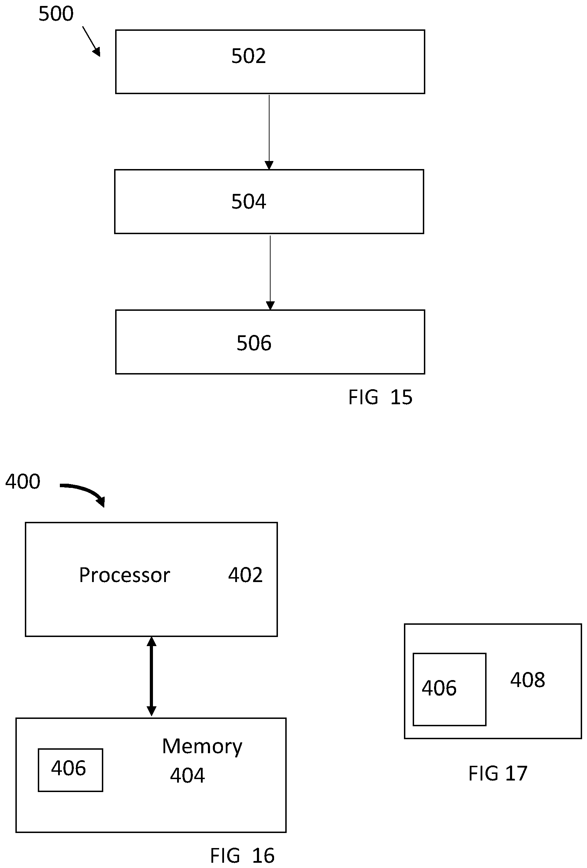

FIG 15 illustrates a method 500 comprising controlling frequency-conversion, in a second signal path 12 for a second channel 22 operating at a second radio frequency within a second frequency range 102, between the second radio frequency and a first radio frequency, wherein the first radio frequency is the radio frequency at which a different first signal path 11 for a different first channel 21 operates, the first frequency being within a first frequency range 101, wherein a magnitude of frequency-conversion is controlled to change in dependence upon a difference between the second frequency and the first frequency.

At block 502, the apparatus 10 receives downlink control information defining the second frequency and and/or the first frequency.

At block 504, the apparatus 10 adjusts frequency conversion between second frequency and the first frequency. It controls frequency-conversion for the second channel 22 between the second frequency and the first frequency in dependence upon the received downlink control information defining the second frequency and and/or in dependence upon the received downlink control information defining the first frequency.

At block 506, the apparatus 10 adjusts frequency conversion between a reference frequency and the first frequency. It simultaneously controls the frequency-conversion for the first channel 21 and the second channel 22 between the reference frequency and the first frequency in dependence upon the received downlink control information defining the first frequency.

Fig 16 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 16 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 10 comprises:

at least one processor 402; and

at least one memory 404 including computer program code,
the at least one memory storing instructions that, when executed by the at least one processor 402, cause the apparatus at least to:

control frequency conversion in a first signal path 11 for a first channel 21 operating at a first frequency (F1) within a first frequency range and a second signal path 12 for a second channel 22 operating at a second frequency (F2) within a second frequency range.

As illustrated in Fig 17, the computer program 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:
control frequency conversion in a first signal path 11 for a first channel 21 operating at a first frequency (F1) within a first frequency range and a second signal path 12 for a second channel 22 operating at a second frequency (F2) within a second frequency range.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10 can be a module.

The above-described examples find application as enabling components of:
automotive systems; telecommunication systems; electronic systems including consumer electronic products;

distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, "determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:

   a first signal path for a first channel operating at a first frequency within a first frequency range;
   a second signal path for a second channel operating at a second frequency within a second frequency range;
   means for controlling frequency-conversion in the second signal path between the second frequency and the first frequency, wherein a magnitude of frequency-conversion is controlled to change in dependence upon a difference between the second frequency and the first frequency.

2. An apparatus as claimed in claim 1, wherein the means for controlling is configured to control frequency-conversion in the second signal path between the second frequency and the first frequency, wherein a magnitude of frequency-conversion is controlled to change with changes in magnitude of the second frequency within the second frequency range and is controlled to match a difference between the second frequency and the first frequency.

3. An apparatus as claimed in claim 1 or 2, wherein the means for controlling frequency-conversion in the second signal path between the second frequency and the first frequency, is configured to control an intermediate frequency in the second signal path to match the first frequency.

4. An apparatus as claimed in any preceding claim comprising a shared frequency synthesizer that provides an output frequency signal to the first signal path and the second signal path.

5. An apparatus as claimed in claim 4, wherein the shared frequency synthesizer is configured to provide a frequency-conversion at the first signal path between the first frequency and a reference frequency and a frequency-conversion at the second signal path between the first frequency and the reference frequency.

6. An apparatus as claimed in claim 4 or 5, wherein the shared frequency synthesizer is a phase-locked loop (PLL) synthesizer comprising a local oscillator and a programmable phase locked loop for providing the output frequency signal, and a local oscillator for providing an input to the phase-locked loop.

7. An apparatus as claimed in any preceding claim, wherein the first signal path for use with the first channel at the first frequency comprises

   a first frequency converter for frequency conversion between the first frequency and a reference frequency;
   and
   the second signal path for use with the second channel at the second frequency comprises
   a second frequency converter for frequency conversion between the second frequency and the first frequency; and
   a third frequency converter for frequency conversion between the first frequency and a reference frequency;
   wherein the means for controlling frequency-conversion in the second signal path between the second frequency and the first frequency, is configured to control the second frequency converter and
   wherein the means for controlling is configured to commonly and simultaneously control both the first frequency converter and third frequency converter to convert between the first frequency and the reference frequency.

8. An apparatus as claimed in any preceding claim, comprising processing circuitry configured for applying the same analog-digital conversion process to the first channel and the second channel.

9. An apparatus as claimed in claim 8, wherein a first processing circuitry is controlled to apply the analog-digital conversion process to the first channel and second processing circuitry is configured to apply simultaneously the analog-digital conversion process to the second channel or

wherein a first processing circuitry is controlled to apply, during a first time, the analog-digital conversion process to the first channel and not the second channel and to apply, during a second time, the analog-digital conversion process to the second channel and not the first channel.

10. An apparatus as claimed in any preceding claim, configured to control frequency-conversion for the second channel between the second frequency and the first frequency in dependence upon received downlink control information defining the second frequency and and/or in dependence upon received downlink control information defining the first frequency.

11. An apparatus as claimed in any preceding claim, wherein

the first signal path is configured for transfer of at least one of a plurality of component carriers that are combined for higher bandwidth information transfer; and/or the second signal path is configured for transfer of at least one of a plurality of component carriers that are combined for higher bandwidth information transfer; and/or the first signal path and the second signal path are configured for transfer of multiple component carriers that are combined for higher bandwidth information transfer.

12. An apparatus as claimed in any preceding claim, configured to split a received physical channel into multiple parallel second channels of contiguous frequency ranges.

13. An apparatus as claimed in any preceding claim, configured as user equipment.

14. A computer program comprising instructions which, when executed by an apparatus, cause the apparatus to perform at least the following:
control frequency conversion in a first signal path for a first channel operating at a first frequency within a first frequency range and a second signal path for a second channel operating at a second frequency within a second frequency range.

15. A method comprising:
controlling frequency-conversion, in a second signal path for a second channel operating at a second radio frequency within a second frequency range, between the second radio frequency and a first radio frequency, wherein the first radio frequency is the radio frequency at which a different signal path for a different channel operates, the first frequency being within a first frequency range, wherein a magnitude of frequency-conversion is controlled to change in dependence upon a difference between the second frequency and the first frequency.

FIG 1

FIG 2A

FIG 2B

FIG 3

FIG 4A

FIG 4B

FIG 5

FIG 6A

FIG 6B

FIG 7

FIG 8

FIG 9

FIG 10

FIG 11

FIG 12

FIG 13

FIG 14

500

502

504

506

FIG 15

400

Processor    402

Memory
406    404

FIG 16

406    408

FIG 17

Europäisches
Patentamt

European
Patent Office

Office européen
des brevets

# EUROPEAN SEARCH REPORT

**Application Number**

EP 24 19 6096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/337274 A1 (NIELSEN KIM [DK]) 20 October 2022 (2022-10-20) * paragraph [0052] - paragraph [0057]; figure 1 * * paragraph [0069] - paragraph [0070] * | 1,2,8, 10-15 | INV. H04B1/00 |
| | ----- | | |
| A | US 5 995 815 A (BLOM TOMAS [SE]) 30 November 1999 (1999-11-30) * column 10; figure 6 * | 1-15 | |
| | ----- | | |

**TECHNICAL FIELDS SEARCHED (IPC)**

H04B

The present search report has been drawn up for all claims

| Place of search | Date of completion of the search | Examiner |
|---|---|---|
| Munich | 16 January 2025 | Ayala Perriello, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 6096

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | | Publication date | Patent family member(s) | | | Publication date |
|---|---|---|---|---|---|---|
| US 2022337274 | A1 | 20-10-2022 | CN | 115225096 | A | 21-10-2022 |
| | | | EP | 4087140 | A2 | 09-11-2022 |
| | | | US | 2022337274 | A1 | 20-10-2022 |
| US 5995815 | A | 30-11-1999 | AU | 4642497 | A | 11-05-1998 |
| | | | BR | 9712215 | A | 31-08-1999 |
| | | | CN | 1233359 | A | 27-10-1999 |
| | | | EE | 9900124 | A | 15-12-1999 |
| | | | EP | 0931385 | A2 | 28-07-1999 |
| | | | US | 5995815 | A | 30-11-1999 |
| | | | WO | 9817010 | A2 | 23-04-1998 |

EPO FORM P0459

For more details about this annex : see Official Journal of the European Patent Office, No. 12/82